# EUROPEAN PATENT APPLICATION

(11) **EP 2 806 700 A1**
(43) Date of publication of application: **26.11.2014**
(21) Application number: 13305648.1
(22) Date of filing: 20.05.2013
(51) Int. Cl.: H04W 72/00, H04W 4/02

(54) **Broadcasting**

(71) Applicant: ALCATEL LUCENT, 92100 Boulogne-Billancourt (FR)
(72) Inventor: Casati, Alessio, Swindon, Wiltshire SN5 7DJ (GB)
(74) Representative: Coghlan, Judith Elizabeth Kensy

(57) **Abstract**

A method of providing information to user equipment capable of receiving messaging via a unicast or broadcast transmission in a wireless communication network, a computer program product and network control node operable to perform that method. The method comprises: determining at least one group of user equipment to which messaging is to be broadcast and an indication of a set of boundary cells which bound a region of the wireless communication network in which the messaging is to be broadcast; establishing an association with user equipment and receiving an indication from the associated user equipment of entry or exit to a cell in the wireless communication network; and if the associated user equipment is determined to be a member of the at least one group of user equipment to which messaging is to be broadcast and the cell being entered or exited by the associated user equipment is one of the set of boundary cells; providing the associated user equipment with an indication of whether to receive messaging via a unicast or broadcast transmission.

## Description

### FIELD OF THE INVENTION

The invention relates to a method of providing information to user equipment capable of receiving messaging via a unicast or broadcast transmission in a wireless communication network; a computer program product and network control node operable to perform that method.

### BACKGROUND

Wireless telecommunications networks are known. In such networks, radio coverage is provided to user equipment, for example, mobile telephones, by region of geographical area or also known as a radio cell. A radio network access node, for example, a base station, is located in each cell to provide the required radio coverage. User equipment in the geographical area covered by a base station is operable to receive information from the base station and to transmit information and data to the base station.

Information and data transmitted by base stations to user equipment occurs on radio links known as downlinks. Information and data transmitted by user equipment to base stations occurs on radio links known as uplinks. In known wireless telecommunication networks, the network may operate such that an ability to broadcast content or multicast content to user equipment in a particular geographical area may be provided.

It may be possible to provide group communication implementations which use a mix of unicast and broadcast bearers in relation to downlink services. According to such implementations of group communication, broadcast techniques may be used in areas where there is a high user density and unicast techniques may be used in areas where user density is expected to be lower. Use of downlink broadcast or multicast techniques can be of use to ensure downlink messaging is sent efficiently within a network since it is likely to use less available resource than unicasting to a plurality of user equipment.

Although such approaches facilitate efficient operation of a wireless telecommunications network, unexpected consequences may occur. Accordingly, it is desired to improve operation of a wireless telecommunications network.

### SUMMARY

According to a first aspect, there is provided a method of providing information to user equipment capable of receiving messaging via a unicast or broadcast transmission in a wireless communication network, that method comprising: determining at least one group of user equipment to which messaging is to be broadcast and an indication of a set of boundary cells which bound a region of said wireless communication network in which the messaging is to be broadcast; establishing an association with user equipment and receiving an indication from the associated user equipment of entry or exit to a cell in the wireless communication network; and, if the associated user equipment is determined to be a member of the at least one group of user equipment to which messaging is to be broadcast and the cell being entered or exited by the associated user equipment is one of the set of boundary cells, providing the associated user equipment with an indication of whether to receive messaging via a unicast or broadcast transmission.

The first aspect recognises that in scenarios in which a network is configured to provide group communication using a mix of unicast and broadcast bearers in the downlink, that implementation may be such that broadcast is used in areas of high user density and unicast is used where user density is expected to be lower. If users move between such areas they risk losing some data, since the detection of a loss of a broadcast bearer may take a significant period of time; for example, up to 10 seconds. Such a loss of data maybe unsuitable for some applications of broadcast or multicast communications - for example, when used for public safety applications in cases that an end user needs to be able to receive information in real time.

It will be appreciated that the first aspect has particular application in relation to efficient handling of downlink messaging. Handling downlink messaging can be more critical to efficient overall network operation, since uplink messaging is sent by one user of a group communication group at any given point and then such information may be sent by downlink to all users of the group communication group. Furthermore, depending upon implementation, downlink messaging may be the only direction of messaging in relation to a service, since in some instances content may simply be sent via downlink from a source within the network to all members of the group.

The first aspect recognises that whilst it is possible to cover a whole network with broadcast information capabilities, such an arrangement may not be needed or may only be needed outside a particular area in certain circumstances. Alternatively, it is of course possible to always use unicast messaging, but such an arrangement may cause congestion of downlink resource, particularly in high user density areas.

Accordingly, a method is provided. The method may comprise a network node method. The method may comprise the step of providing information to user equipment which is capable of receiving messaging via either unicast, broadcast or multicast transmission in a wireless telecommunication network.

It will be appreciated that not all users in a network may be candidates or members of groups which are being served by multicast or broadcast techniques. The method may comprise the step of determining at least one group of user equipment to which messaging is to be broadcast or multicast, together with an indication of a set of boundary cells which bound a region of the wireless communication network in which the messaging is to be broadcast or multicast. It may be that only a single cell is intended to be used for broadcast or multicasting and, thus, that cell itself is the boundary cell. Alternatively, there may be a plurality of regions in which broadcast or multicast function is intended to be provided to a group of user equipment. Accordingly, a plurality of sets of boundary cells may be provided.

The method may comprise the step of establishing an association with user equipment and receiving an indication from the associated user equipment of entry or exit to a cell in the wireless telecommunication network. Such an association may simply be established when user equipment makes use of a user plane connection to contact a relevant network node within the network.

The method may comprise the step of providing user equipment with an indication of whether to receive messaging via a unicast or broadcast transmission, that information being provided if the associated user equipment is determined to be a member of the at least one group of user equipment to which messaging is to be broadcast or multicast and the cell being entered or exited by that associated user equipment is determined to be one of the set of boundary cells. Accordingly, when a user enters a boundary cell, it may receive assistance in relation to any decision it might make as to whether it ought to transition from unicast to broadcast or multicast, and vice versa.

Information provided by the method of the first aspect can allow user equipment to make a decision in relation to a suitable transmission mode. That decision maybe based on application level criteria and/ or information relating to load status provided by a network.

Furthermore, a method in accordance with the first aspect may allow that when a user is determined to exit a boundary cell, appropriate information may be provided to allow a user to make a decision about an appropriate messaging configuration. It will be appreciated that said determining, establishing, receiving and providing steps may occur at a group communication application provided in an application layer of said wireless communication network.

The first aspect may provide that when a user leaves a boundary cell it is operable to notify the group communication application and to also report to the application whether broadcast or multicast communication is available in the new cell which it has just entered. If broadcast communication is available in the new cell and that new cell is not a boundary cell itself, then the user equipment may, based on information provided by the application from the network for example, be operable to switch to using broadcast techniques in the downlink. If no broadcast communication is available in a cell in which the user equipment has entered, the user equipment may be operable to use unicast techniques even if the user was not specifically instructed to use unicast techniques by the group communication application in the boundary cell in which it was previously operating.

In one embodiment, the method further comprises: receiving an indication of whether an entered cell is broadcasting messaging to the at least one group of user equipment. Accordingly, if it is determined that a cell is not operating such that a broadcast or multicast group, for example, as defined by a TMGI in a EUTRAN, is supported by a broadcast transmission in a cell, that information can be provided to, for example, a group communication control application. That information may be provided by user equipment operating in a cell, or may be provided by the network. If broadcast messaging is unavailable in a cell, user equipment may be operable to select unicast reception of messaging. A group communication control application may be able to store information relating to a cell based on previous information provided by user equipment or the network and provide such information to assist a user to make a decision between multicast and unicast reception.

In one embodiment, the indication of whether to receive messaging via a unicast or broadcast transmission comprises: an indication of at least one condition to be met by the cell being entered or exited by the associated user equipment. Accordingly, the user equipment may be provided with a static, or dynamic, set of conditions which it may apply in order to determine whether it might be more appropriate to receive messaging from a network in a broadcast message or by means ofunicast techniques. The condition or set of conditions may comprise threshold values of cell or user parameters which may be of relevance to efficient operation of the user in the network.

In one embodiment, the indication of whether to receive messaging via a unicast or broadcast transmission comprises: an indication of at least one parameter indicative of network loading in the cell being entered or exited by the associated user equipment. Accordingly, since loading in a network or a cell may be of significance to the overall efficiency of a network, that information may be used by a group communication control application to influence any decision made by user equipment in relation to whether to proceed via broadcast or unicast reception. The group communication control application may be operable to maintain an indication of a number of users in a cell which would be available to receive messaging via broadcast. There may be a threshold number of users beyond which it becomes advantageous to recommend that users request a broadcast, rather than unicast mode of operation.

In one embodiment, the determining, establishing, receiving, and providing occur at a group communication application provided in an application layer of the wireless communication network. Accordingly, user equipment which determine themselves to be a member of a group, identified by a group identifier used in the wireless network, for example, TMGI broadcast or multicast group in EUTRAN, may be operable to establish contact with a group communication control application so that their operation can be effectively controlled. In some embodiments, the group communication control application is operable to provide information to other applications in the network. Accordingly, the group communication control application may maintain an overview of all group communication which occurs within a network and be able to balance the needs of those applications by providing appropriate information to users to influence any decision regarding a choice between broadcast and unicast reception techniques. It will, of course, be appreciated that the method of the first aspect may be used to control operation of a plurality of user groups within a network, for example, a plurality of group identifiers used in the wireless network, for example, TMGI for EUTRAN, used to identify groups of users which are candidates for broadcast reception. Accordingly, the operation of a plurality of groups within a network may be optimised based on parameters implemented by the method.

In one embodiment, the method further comprises: maintaining a count of user equipment in the at least one group of user equipment in each of the boundary cells. Accordingly, the method may operate to provide information to an associated user equipment which strongly suggests selection of broadcast techniques if there are a large number of users in a cell, or unicast techniques if the user is, for example, the only user in a given boundary cell.

In one embodiment, the method further comprises: receiving an indication of network loading in each of the boundary cells. Accordingly, the method may operate to provide information to an associated user equipment which strongly suggests selection of broadcast techniques if the network is heavily loaded in a cell, or unicast techniques if the user is, for example, lightly loaded.

In one embodiment, the indication comprises an order to the associated user equipment to receive messaging via one of: a unicast or broadcast transmission. Accordingly, the method may be such that rather than provide information to a user such that it can make an autonomous decision, the decision may be specifically made, based on information available to, for example, a group communication control application, and then transmitted to an associated user. In the case where user equipment makes an autonomous decision, the method may further comprise receiving an indication of a decision made by each associated user equipment, so that information can be used when transmitting information to other user equipment entering or exiting a cell to influence their decision as appropriate.

A second aspect provides a computer program product operable, when executed on a computer, to perform the method of the first aspect.

A third aspect provides a network control node operable to provide information to user equipment capable of receiving messaging via a unicast or broadcast transmission in a wireless communication network, the network control node comprising: determination logic operable to determine at least one group of user equipment to which messaging is to be broadcast and an indication of a set of boundary cells which bound a region of the wireless communication network in which the messaging is to be broadcast; association logic operable to establish an association with user equipment and receive an indication from the associated user equipment of entry or exit to a cell in the wireless communication network; and information provision logic operable to provide the associated user equipment with an indication of whether to receive messaging via a unicast or broadcast transmission if the associated user equipment is determined to be a member of the at least one group of user equipment to which messaging is to be broadcast and the cell being entered or exited by the associated user equipment is one of the set of boundary cells.

In one embodiment, the network control node determination logic is further operable to receive an indication of whether an entered cell is broadcasting messaging to the at least one group of user equipment.

In one embodiment, the indication of whether to receive messaging via a unicast or broadcast transmission comprises: an indication of at least one condition to be met by the cell being entered or exited by the associated user equipment.

In one embodiment, the indication of whether to receive messaging via a unicast or broadcast transmission comprises: an indication of at least one parameter indicative of network loading in the cell being entered or exited by the associated user equipment.

In one embodiment, the network control node comprises a group communication application provided in an application layer of the wireless communication network. In one embodiment, the determining, establishing, receiving, and providing occur at a group communication application provided in an application layer of the wireless communication network.

In one embodiment, the network control node further comprises: count logic operable to maintain a count of user equipment in the at least one group of user equipment in each of the boundary cells.

In one embodiment, the determination logic is further operable to receive an indication of network loading in each of the boundary cells.

In one embodiment, the indication comprises an order to the associated user equipment to receive messaging via one of: a unicast or broadcast transmission.

A fourth aspect provides a method of receiving information relating to whether to receive messaging via a unicast or broadcast transmission at user equipment capable of receiving messaging via a unicast or broadcast transmission in a wireless communication network, the method comprising: determining whether the user equipment is a member of least one group of user equipment to which messaging is to be broadcast; establishing an association with a group communication application node; transmitting an indication of entry or exit to a cell in the wireless communication network together with an indication of whether reception of the messaging to be broadcast is available in the cell; and receiving an indication from the group communication application node of whether to receive messaging via a unicast or broadcast transmission.

In one embodiment, the method further comprises: receiving an indication of a set of boundary cells which bound a region of the wireless communication network in which the messaging is to be broadcast, and transmitting an indication of entry or exit to a cell only in relation to a cell determined to be one of the boundary cells.

In one embodiment, the method further comprises: transmitting an indication of whether an entered cell is broadcasting messaging to the at least one group of user equipment.

In one embodiment, the indication of whether to receive messaging via a unicast or broadcast transmission comprises: an indication of at least one condition to be met by the cell being entered or exited by the associated user equipment.

In one embodiment, the indication of whether to receive messaging via a unicast or broadcast transmission comprises: an indication of at least one parameter indicative of network loading in the cell being entered or exited by the associated user equipment.

In one embodiment, the group communication application is provided in an application layer of the wireless communication network.

In one embodiment, the method further comprises: receiving an indication of network loading in each of the boundary cells.

In one embodiment, the indication comprises an order to the associated user equipment to receive messaging via one of: a unicast or broadcast transmission.

A fifth aspect provides a computer program product operable, when executed on a computer, to perform the method of the fourth aspect.

A sixth aspect provides user equipment operable to receive information relating to whether to receive messaging via a unicast or broadcast transmission, the user equipment being capable of receiving messaging via a unicast or broadcast transmission in a wireless communication network, the user equipment comprising: determination logic operable to determine whether the user equipment is a member of least one group of user equipment to which messaging is to be broadcast; association establishment logic operable to establish an association with a group communication application node; transmission logic operable to transmit an indication of entry or exit to a cell in said wireless communication network together with an indication of whether reception of the messaging to be broadcast is available in the cell; and reception logic operable to receive an indication from the group communication application node of whether to receive messaging via a unicast or broadcast transmission.

In one embodiment, the user equipment further comprises: reception logic operable to receive an indication of a set of boundary cells which bound a region of the wireless communication network in which the messaging is to be broadcast, and said transmission logic is operable to transmit an indication of entry or exit to a cell only in relation to a cell determined to be one of the boundary cells.

In one embodiment, the transmission logic is operable to transmit an indication of whether an entered cell is broadcasting messaging to the at least one group of user equipment.

In one embodiment, the indication of whether to receive messaging via a unicast or broadcast transmission comprises: an indication of at least one condition to be met by the cell being entered or exited by the associated user equipment.

In one embodiment, the indication of whether to receive messaging via a unicast or broadcast transmission comprises: an indication of at least one parameter indicative of network loading in the cell being entered or exited by the associated user equipment.

In one embodiment, the group communication application is provided in an application layer of the wireless communication network.

In one embodiment, the reception logic is operable to receive an indication of network loading in each of the boundary cells.

In one embodiment, the indication comprises an order to the associated user equipment to receive messaging via one of: a unicast or broadcast transmission.

In one embodiment, the user equipment is, for example, provisioned with a boundary cell list and logic is provided to make a switching decision locally at user equipment. That decision may, for example, maybe also aided by one or more broadcast signal received from the network, that signal, for example, providing downlink load status. In some embodiments, user equipment may be provisioned with cell ID information. That cell ID information may comprise an indication of a boundary of a group distribution via application layer interaction, such that when user equipment arrives at a cell where a switch between unicast and multicast communication is possible. An application in accordance with aspects and embodiments described herein may be operable to assist users to decide whether to switch to or from broadcast, or to from unicast reception. That decision may be made by user equipment depending upon the criticality of not missing any broadcast communication. The decision and thresholds applied by the user equipment or by the group communication control application may be based on information relating to, for example, exceptional cell loads experienced and reported to an application by an operator. Such provisioning can avoid the need of user equipment to always report a cell in which it is operating to the group communication server, and to simply report when it enters or exits a boundary cell.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically a system architecture according to one embodiment;
Figure 2 illustrates schematically interaction of user equipment with a network according to one embodiment;
Figure 3 illustrates schematically network signalling according to one embodiment; and
Figure 4 illustrates schematically network signalling according to one embodiment.

### DESCRIPTION OF THE EMBODIMENTS

### Overview

Before discussing the embodiments in any more detail, first an overview will be provided. As mentioned above, in some wireless telecommunication networks, it is possible to provide an ability to broadcast or multicast content in given service areas. Such a possibility is described, for example, in 3GPP TS23.246.

In an LTE network there are applications which allow for the provision of communication to a group of users using a mix of unicast and broadcast bearers in the downlink. Implementations include ones in which broadcast methods are used in areas of high user density and unicast methods are used to communicate with members of the group in areas where user density is expected to be lower.

If users move between such areas they run the risk of losing some data since the detection of loss of a broadcast bearer may take up to 10 seconds. It will be appreciated that for some applications of a group communication scenario and, in particular, those relating to public safety applications, such a delay may be unacceptable, particularly in relation to mission-critical instructions such as "don't shoot" or an alert of imminent threat, in which instances a user needs to be able to receive information in real time.

Since, in a broadcast or multicast scenario, downlink will typically be handled such that it is one to many in terms of mapping, it is important that the downlink is handled efficiently.

It will be appreciated that one solution would be to provide that all cells in a network were able to broadcast information to a particular group identified for group communication, but such an arrangement may not be needed in the case where all users of the group are outside a high user density area. Similarly, it may always be possible to use unicast (that is to say, one to one) mapping for communications within a group. One to one mapping via a multiplicity of links, rather than a single broadcast message, uses greater network resource and may result in downlink getting congested, particularly in areas of high user density.

Aspects and embodiments described provide a group communication application. In particular, aspects and embodiments provide a group communication application which, according to some aspects, if a user enters a boundary cell it may be operable to require a group communications application in accordance with an embodiment described, to assist it to make a decision as to whether the user equipment should transition from unicast to broadcast or vice versa. That decision may be based, for example, on application level criteria and information on cell load status which is fed from the network to a group communication application operating in accordance with aspects and embodiments described herein.

Similarly, when user equipment leaves a boundary cell, it may also be operable, according to some aspects and embodiments, to notify a group communication application of its exit from a cell. User equipment may be operable to report whether a new cell has broadcast communication available or not. If broadcast communication is available in the new cell (and the cell is not itself a boundary cell), then the user equipment may be operable to switch to using broadcast or multicast means to receive downlink messaging. If, however, in the new cell no broadcast capability is available, unicast methods must be used even if the user equipment was not instructed, or did not take the decision based on information provided, to use unicast methods in the previously occupied boundary cell.

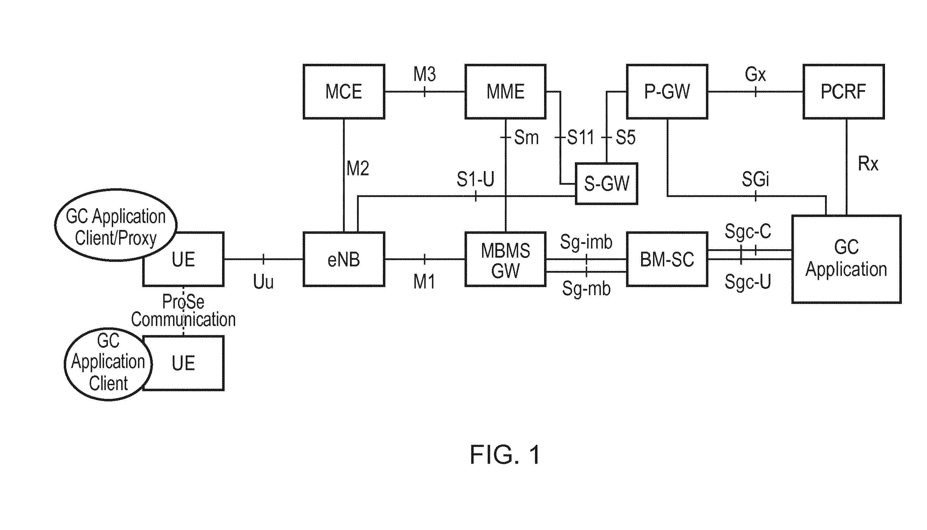

Figure 1 illustrates schematically a system architecture according to one embodiment. In the embodiment shown in Figure 1, a broadcast/ multicast service can be provided by an evolved packet system via EUTRAN (evolved UMTS Terrestrial Access Network, that is a radio access network supporting the OFDMA radio transmission technology also known in the industry as LTE). An example of such a EUTRAN based broadcast delivery system is documented in 3GPP Standard Document TS23.246. In particular, aspects and embodiments described herein provide a Group Communication application (GC application) using this EUTRAN capability for broadcasting.

According to some aspects and embodiments, a Multicast Broadcast Service Centre (MBSC) in the system architecture is operable to provide the GC application with a list of cells at a boundary of a broadcast service area. That information can be provided as directed by the GC application itself. It will be appreciated that a broadcast or multicast group of user equipment can be identified over a radio interface by using a TMGI (Temporary Mobile Group Identity). That TMGI is used within the MBSC to identify multicast and broadcast bearer services. Furthermore, it will be appreciated that boundary cells can be provided by the MBSC to the GC application, for each TMGI which is active within a wireless communication network with the GC application is using.

Wireless telecommunications networks operating using the system architecture shown in Figure 1 are such a given user and member of a TMGI which has been identified for multicast or broadcast services may be operable to receive content from a network using either a unicast path or a broadcast path. The unicast path would typically be managed by the group communication application via a Policy and Charging Rules Function (PCRF) and a multicast transmission is managed via the MBSC.

When a user equipment uses unicast communication for downlink traffic, the path is via the packet gateway SGi interface and the PCRF provides the GC application with a means to interact with the infrastructure on the control plane via a reception interface.

When the user equipment uses multicast communication for downlink traffic, then a BMSC (Broadcast and Multicast Service Centre) is operable to provide the GC application with a means to interact with the system architecture on the control plane interface defined by signalling SGC-C and on the user plane interface in the downlink via the BMSC over an SGC-U interface.

Uplink user traffic in the system architecture depicted in Figure 1 is such that signalling from the user reaches the GC application via SGi interface. Similarly, both uplink and downlink GC application signalling with the user equipment is via an SGi interface.

In some embodiments, user equipment itself may be operable to act as a relay and thus may also be operable to act as a GC application proxy on behalf of those user equipment that can connect to it using proximity services (ProSe). In some embodiments it may simply transparently relay all traffic depending on the definition of ProSe relays in force.

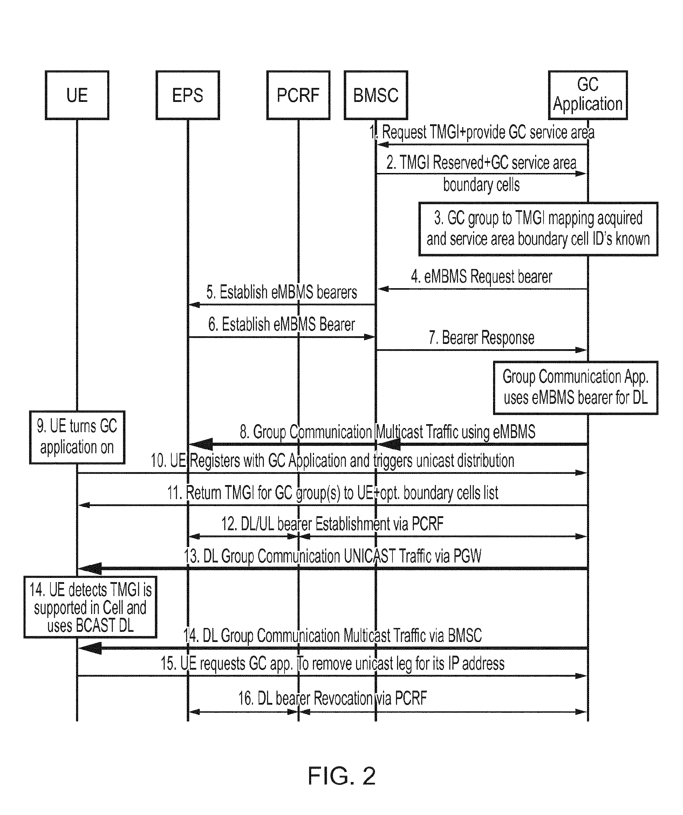

Figure 2 illustrates schematically interaction of user equipment with a network according to one embodiment. As shown in Figure 2, a group communication application according to one embodiment is operable to set up a broadcast transmission path for group communication distribution by interacting with a BMSC. The BMSC is operable, in the embodiment shown, to provide the group communication application with a TMGI which is used over radio links to identify the broadcast transmission for group communication. The group communication application is also operable to receive, in this embodiment, as a result of a request to provide an indication of group communication service area, a list of boundary cell identities, that list of cell IDs being provided in relation to those cells at the boundary of a service area identified for broadcast communication for a given TMGI.

As a result, according to the embodiment illustrated, the group communication control application is in possession of information which provides mapping of a multicast IP address used for group communication and a TMGI used over radio links to identify the broadcast transmission for group communication. The group communication control application also possesses a list of cells at the boundary of the broadcast service area.

With such information, the GC application may be operable to start sending downlink data to the Evolved Packet System (EPS) via the BMSC over an SGC-U interface. Such an interface is simply a user plane interface and a means by which the GC application can interact with the BMSC by providing the intended multicast address in any IP packets it is operable to send. That is to say, the SGC-U interface is really purely a user plane interface.

As illustrated in Figure 2, at step 9, user equipment may be powered on and may be operable to register on the user plane with the group control application server which provides group communication. That registration may use protocols and procedures outside the scope of 3GPP. As part of such procedures, at step 11 shown in Figure 2, the user equipment may be operable to obtain the TMGI intended to be used to receive broadcast communication. Furthermore, according to some embodiments, the user equipment may be operable to receive a list of cells of which it is required to report entry and exit to the group control application.

If the user equipment was not in a broadcast communication coverage area, the group communication control application server can be triggered to send downlink packets using a downlink bearer which can be established via a PCRF, assuming a dedicated bearer is required. In the case where a dedicated bearer is not required the user equipment may be operable to receive downlink traffic on the default bearer already available on which communication was sent to the group communication control application.

In the event that user equipment enters a cell where broadcast transmissions of the TMGI provided to the user equipment by the GC application is available, the user equipment may be operable to join an available broadcast distribution and ask the network to release distribution via its unicast IP address.

In another embodiment, when user equipment enters a cell determined to be in the boundary list it may invoke information and/ or assistance from the group communication control application to allow it to assist in its decision in relation to whether to use unicast or broadcast techniques.

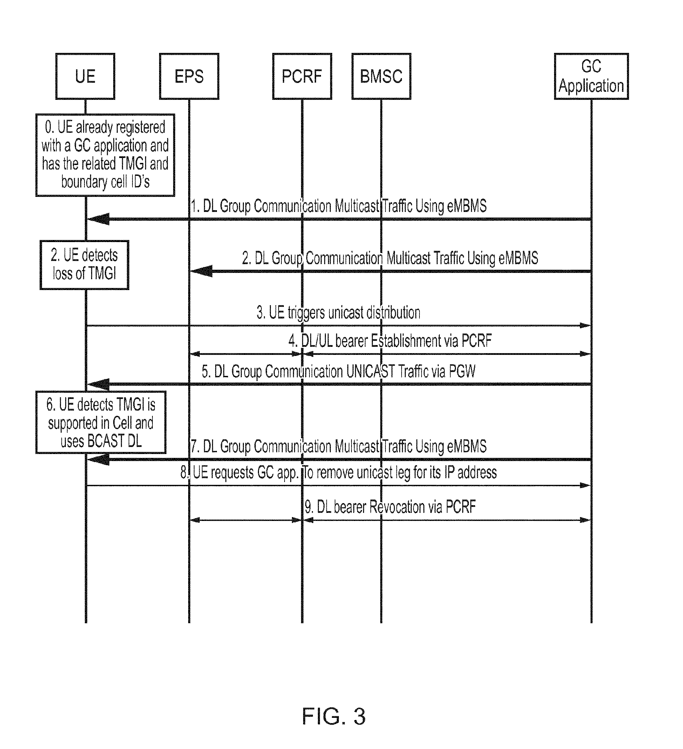

Figure 3 illustrates schematically network signalling according to one embodiment. Figure 3 illustrates schematically a signalling flow according to one embodiment which describes switching between broadcast and unicast mode. In the example shown in Figure 3, that switching can be based solely on TMGI detection in a given cell.

It will be understood that the detection of loss of TMGI at user equipment is an event which can potentially cause disruption of communication within a network. Unlike in the case where user equipment is using unicast traffic and then switches to use broadcast traffic via an enhanced MBMS, when user equipment switches from broadcast traffic to unicast traffic there can be a time interval up to five to 10 seconds, where the user equipment may lose downlink data and messaging. Although that loss may not be critical in some applications, in others it may be essential for users to receive real time data and messaging. Some aspects and embodiments may allow amelioration of such a loss of data. Accordingly, if user equipment is operable to detect a boundary of a service area beyond which TMGI communication is not offered, preparation may be made at the user or by the network for a potential loss of group communication. According to some embodiments, detection of the boundary of a service area can be implemented by providing a cell ID list to user equipment such that the boundary cells are provisioned on the user equipment or provided to it at time of registration with a group communication application in accordance with aspects and embodiments described herein. It will, of course, be appreciated that the list of boundary cells may be updated dynamically over the unicast channel using UE-GC application signalling or broadcast on an MBMS channel specific to an application.

In some embodiments, if user equipment is using an MBMS (broadcast reception on the downlink) and arrives at a cell determined to be in the boundary list, the user equipment may be operable to trigger the group communication application to assist it in any decision as to whether it might be advantageous to switch to unicast communication techniques. In some embodiments, the user equipment may also be operable to notify the group communication application when it leaves a boundary cell. Furthermore, in some embodiments, when entering a new cell from a boundary cell, user equipment may be operable to inform a group communication application as to whether the cell which it has entered is able to support its broadcast group (TMGI) or not. The GC application may, according to some embodiments, based on parameters related to load in a cell and other parameters (for example, counted user equipment which have triggered assistance in the cell of interest, cell congestion feedback from the PCRF, and other similar criteria related to a particular implementation), be operable to provide information to user equipment or order user equipment to enable the user equipment to switch to unicast communication whilst it may still be operable to receive broadcast data.

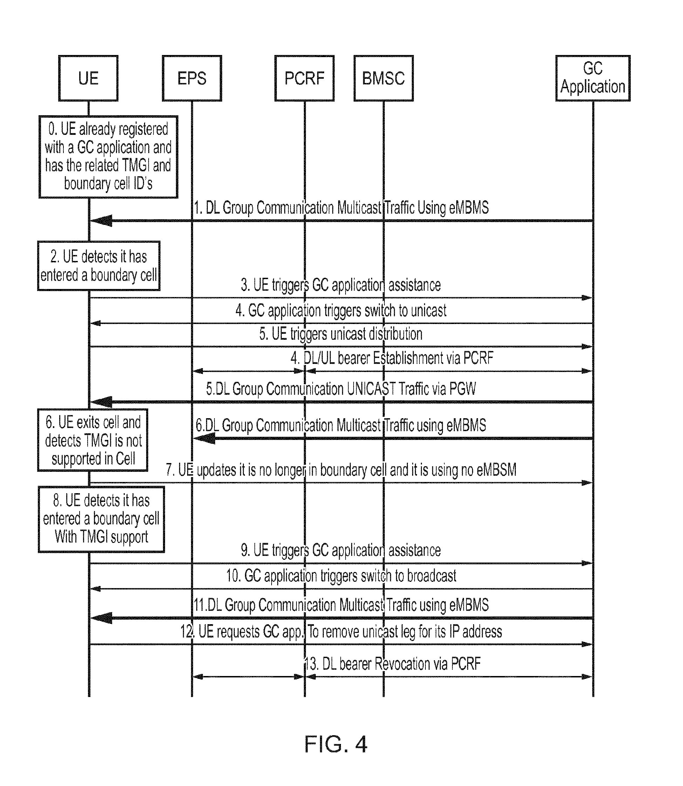

Figure 4 illustrates schematically user equipment and group communication control application signalling according to one embodiment. It can be seen from Figure 4 that the messaging required in the case that the group communication control application is able to provide more intelligence to user equipment is greater than that in a simple implementation. However, the advantage of collating and providing that information to user equipment can be that a decision to switch user equipment between unicast and broadcast reception can be controlled or influenced by the application in a relatively straightforward way.

Similarly, in some embodiments where the GC application server is shared by many applications, it can allow for coordinated decisions for multiple applications.

In some embodiments, it can be noted that user equipment maybe operable to take unilateral decisions relating to the choice of whether to implement unicast or broadcast reception techniques in the downlink. In such embodiments, the user equipment may still be operable to update a group communication control application of such a unilateral decision since that information may be relevant to keep account of the number of relevant users in any given cell.

Various alternative arrangements may be implemented in addition to or instead of those arrangements described in relation to the embodiments of Figures 1 to 4. For example, the GC application may be notified, via the PCRF or OAM, regarding whether some boundary cells are saturated with unicast traffic. It will be appreciated that that information can be used by the GC application or user equipment to aid a decision between unicast and multicast downlink. If a cell is saturated with unicast traffic or is in a congested state, using broadcast downlink may be better to avoid losing traffic on unicast bearers. In other words, according to some implementations, a network may be operable to provide load status to the GC application.

Aspects and embodiments described herein maybe ofparticular use when an LTE network is used to support public safety communications. Aspects and embodiments described may allow for handling of group communication and group management at an application layer in an LTE network. Aspects and embodiments may assume the mapping of a group of users to IP multicast addresses, that mapping being performed based on application layer criteria. In some embodiments the distribution of traffic for multicast IP addresses via an EMBMS can be broadcast to specific areas within a network based on application layer criteria.

User equipment may be operable to join application layer groups either by listening to an EMBMS broadcast associated with a TMGI which is notified to user equipment in the group by a group communication application. Alternatively or additionally, user equipment may be operable to join application layer groups by unicast, since user equipment may directly notify a group communication application when a TMGI related channel is available within a cell.

Aspects and embodiments may be applicable when broadcast groups are long term and when broadcast groups are created on demand. User equipment may receive notification of available groups on a unicast channel or by listening on a dedicated broadcast channel available over a whole PS network.

It will be appreciated that a broadcast system for an LTE network, in relation to a public safety implementation, may remain application neutral. A system may provide some public safety optimizations for enhanced MBMS communication.

Different public safety applications may be available by the same PDN connection or by different PDN connections.

User equipment may be provisioned with cell ID information. That cell ID information may constitute an indication of a boundary of a group distribution via application layer interaction, such that when user equipment arrives at a cell where a switch between unicast and multicast communication is possible, an application in accordance with aspects and embodiments described herein may be operable to assist users to decide whether to switch to or from broadcast, or to or from unicast reception. That decision may be made by user equipment depending upon the criticality of not missing any broadcast communication. The decision and thresholds applied by the user equipment or by the group communication control application may be based on information relating to, for example, exceptional cell loads experienced and reported to an application by an operator. Such provisioning can avoid the need of user equipment to always report a cell in which it is operating to the group communication server, and to simply report when it enters or exits a boundary cell.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage.

Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of providing information to user equipment capable of receiving messaging via a unicast or broadcast transmission in a wireless communication network, said method comprising:
determining at least one group of user equipment to which messaging is to be broadcast and an indication of a set of boundary cells which bound a region of said wireless communication network in which said messaging is to be broadcast;
establishing an association with user equipment and receiving an indication from said associated user equipment of entry or exit to a cell in said wireless communication network; and
if said associated user equipment is determined to be a member of said at least one group of user equipment to which messaging is to be broadcast and said cell being entered or exited by said associated user equipment is one of said set of boundary cells;
providing said associated user equipment with an indication of whether to receive messaging via a unicast or broadcast transmission.

2. A method according to claim 1, wherein said method further comprises:
receiving an indication of whether said entered cell is broadcasting said messaging to said at least one group of user equipment.

3. A method according to claim 1 or claim 2, wherein said indication of whether to receive messaging via a unicast or broadcast transmission comprises an indication of at least one condition to be met by said cell being entered or exited by said associated user equipment.

4. A method according to any preceding claim, wherein said indication of whether to receive messaging via a unicast or broadcast transmission comprises: an indication of at least one parameter indicative of network loading in said cell being entered or exited by said associated user equipment.

5. A method according to any preceding claim, wherein said determining, establishing, receiving, and providing occur at a group communication application provided in an application layer of said wireless communication network.

6. A method according to any preceding claim, wherein said method further comprises:
maintaining a count of user equipment in said at least one group of user equipment in each of said boundary cells.

7. A method according to any preceding claim, wherein said method further comprises: receiving an indication of network loading in each of said boundary cells.

8. A method according to any preceding claim, wherein said indication comprises an order to said associated user equipment to receive messaging via one of: a unicast or broadcast transmission.

9. A computer program product operable, when executed on a computer, to perform the method of any one of claims 1 to 8.

10. A network control node operable to provide information to user equipment capable of receiving messaging via a unicast or broadcast transmission in a wireless communication network, said network control node comprising:
determination logic operable to determine at least one group of user equipment to which messaging is to be broadcast and an indication of a set of boundary cells which bound a region of said wireless communication network in which said messaging is to be broadcast;
association logic operable to establish an association with user equipment and receive an indication from said associated user equipment of entry or exit to a cell in said wireless communication network; and
information provision logic operable to provide said associated user equipment with an indication of whether to receive messaging via a unicast or broadcast transmission if said associated user equipment is determined to be a member of said at least one group of user equipment to which messaging is to be broadcast and said cell being entered or
exited by said associated user equipment is one of said set of boundary cells.

11. A method of receiving information relating to whether to receive messaging via a unicast or broadcast transmission at user equipment capable of receiving messaging via a unicast or broadcast transmission in a wireless communication network, said method comprising:
determining whether said user equipment is a member of least one group of user equipment to which messaging is to be broadcast;
establishing an association with a group communication application node;
transmitting an indication of entry or exit to a cell in said wireless communication network together with an indication of whether reception of said messaging to be broadcast is available in said cell; and
receiving an indication from said group communication application node of whether to receive messaging via a unicast or broadcast transmission.

12. A method according to claim 11, comprising: receiving an indication of a set of boundary cells which bound a region of said wireless communication network in which said messaging is to be broadcast, and transmitting an indication of entry or exit to a cell only in relation to a cell determined to be one of said boundary cells.

13. A method according to claim 11 or claim 12, wherein said indication from said group communication application node comprises: an order to receive messaging via a unicast or broadcast transmission.

14. A computer program product operable, when executed on a computer, to perform the method of any one of claims 12 or 13.

15. User equipment operable to receive information relating to whether to receive messaging via a unicast or broadcast transmission, said user equipment being capable of receiving messaging via a unicast or broadcast transmission in a wireless communication network, said user equipment comprising:
determination logic operable to determine whether said user equipment is a member of least one group of user equipment to which messaging is to be broadcast;
association establishment logic operable to establish an association with a group communication application node;
transmission logic operable to transmit an indication of entry or exit to a cell in said wireless communication network together with an indication of whether reception of said messaging to be broadcast is available in said cell; and
reception logic operable to receive an indication from said group communication application node of whether to receive messaging via a unicast or broadcast transmission.
